Europäisches Patentamt

(19) **European Patent Office**

**Office européen des brevets**

(11) Veröffentlichungsnummer: **0 248 929**

**A1**

(12) **EUROPÄISCHE PATENTANMELDUNG**

(21) Anmeldenummer: **86107928.3**

(22) Anmeldetag: **10.06.86**

(51) Int. Cl.4: **A01N 65/00**

(43) Veröffentlichungstag der Anmeldung:
**16.12.87 Patentblatt 87/51**

(84) Benannte Vertragsstaaten:
**AT BE CH DE FR GB IT LI LU NL SE**

(71) Anmelder: **DETIA FREYBERG GMBH**
**Dr.-Werner-Freyberg-Str. 11**
**6947 Laudenbach/Bergstrasse(DE)**

(72) Erfinder: **Barth, Volker, Dr.**
**Dirmsteiner Weg 47**
**D-6700 Ludwigshafen 29(DE)**
Erfinder: **Münzel, Martin, Dr.**
**Röderweg 15a**
**D-6140 Bensheim(DE)**

(74) Vertreter: **Weinhold, Peter, Dr. et al**
**Patentanwälte Dipl.-Ing. G. Dannenberg Dr.**
**P. Weinhold Dr. D. Gudel Dipl.-Ing. S.**
**Schubert Dr. P. Barz Siegfriedstrasse 8**
**D-8000 München 40(DE)**

(54) **Rodentizide Mittel und Verfahren zu deren Herstellung.**

(57) Die vorliegende Erfindung betrifft rodentizide Mittel auf Köderbasis, bei denen man auf bzw. in reversibel dehydratisierte , vorzugsweise gefriergetrockneten Gemüse-und/oder Obstköder in Form kleiner Teilchen oder Granulate einen rodentiziden Wirkstoff auf-bzw. einbringt und die so behandelten Teilchen gegebenenfalls zu Tabletten, Pellets, Kügelchen oder anderen Körpern mit regelmäßiger Form verarbeitet. Ferner betrifft die Erfindung ein Verfahren zur Herstellung derartiger rodentizider Mittel.

EP 0 248 929 A1

## RODENTIZIDE MITTEL UND VERFAHREN ZU DEREN HERSTELLUNG

Die vorliegende Erfindung betrifft rodentizide Mittel auf Köderbasis sowie ein Verfahren zur Herstellung von diesen.

Es sind bereits die unterschiedlichsten Mittel zur Bekämpfung von im Boden lebenden pflanzenschädlichen, durch ihre Bautätigkeit schädlichen oder hygieneschädlichen Nagetieren bekannt. So gibt es beispielsweise handelsübliche Bekämpfungsmittel für Nagetiere, welche Begasungsmittel darstellen. Derartige Begasungsmittel haben aber den Nachteil, daß sie ein umständliches und aufwendiges Anwendeverfahren erfordern und im allgemeinen keine selektive Wirksamkeit aufweisen.

Des weiteren sind auch Trockenköder bekannt, die als aktiven Wirkstoff Rodentizide unterschiedlicher Art enthalten können. Es hat sich jedoch herausgestellt, daß diese Trockenköder von den betreffenden Nagetieren nicht in dem gewünschten Maße angenommen werden. Dazu kommt, daß nach Aufnahme von Trockenködern durch den Schädling dieser bestrebt ist, eine entsprechende Menge an feuchter Nahrung zu fressen, wodurch der Vergiftungseffekt des Köders stark herabgemindert wird. Das wird auf die Tatsache zurückgeführt, daß diese Nagetiere ihren Wasserbedarf weitgehend über die Nahrungsaufnahme decken.

Die Herstellung und Nutzung von Rodentizide enthaltenden Frischködern wäre arbeitsaufwendig und für den Anwender nicht praktikabel. Des weiteren sind derartige Frischköder durch zu geringe Haltbarkeit nicht marktfähig.

Ziel der vorliegenden Erfindung ist somit die Schaffung eines rodentiziden Mittels zur Bekämpfung von schädlichen Nagetieren, insbesondere von Wühlmäusen, Präriehunden, Bisamratten, Wildkaninchen, im Feld schädlichen Ratten und hygieneschädlichen Nagetieren. Diese rodentiziden Mittel sollen für die Nagetierschädlinge eine einem Frischköder ähnliche Attraktivität besitzen, selektiv wirken und ökologisch unbedenklich sein, d.h. z.B. die Gefahr von Sekundärvergiftungen von z.B. Haustieren und Greifvögeln vermindern und durch schnellen Abbau im Boden rückstandsdynamisch unbedenklich sein. Weiterhin soll die Herstellung und Nutzung des Köders problemlos möglich sein.

Gegenstand der vorliegenden Erfindung sind nun rodentizide Mittel auf Köderbasis, die dadurch gekennzeichnet sind, daß sie einen reversibel dehydratisierten, vorzugsweise gefriergetrockneten Gemüse-und/oder Obstköder und einen rodentiziden Wirkstoff als wesentliche Bestandteile umfassen. Ein weiterer Gegenstand der Erfindung ist ein Verfahren zur Herstellung von rodentiziden Mitteln auf Köderbasis, das dadurch gekennzeichnet ist, daß man auf bzw. in reversibel dehydratisierte , vorzugsweise gefriergetrocknete Gemüse-und/oder Obstköder in Form kleiner Teilchen oder Granulate einen rodentiziden Wirkstoff auf-bzw. einbringt und die so behandelten Teilchen gegebenenfalls zu Tabletten, Pellets, Kügelchen oder anderen Körpern mit regelmäßiger Form verarbeitet.

Der Gemüse-und/oder Obstköder kann von allen Gemüse-und Obstarten, welche von den zu bekämpfenden Schädlingen angenommen werden, stammen. Insbesondere zur Bekämpfung der Wühlmaus haben sich beispielsweise Teilchen von Sellerie oder Karotten als hervorragend geeignet erwiesen. Die Größe der Teilchen ist zweckmäßigerweise so zu bemessen, daß sie dem Freßverhalten des jeweilig zu bekämpfenden Nagetiers angepaßt ist.

Die Herstellung der reversibel dehydratisierten, insbesondere gefriergetrockneten Gemüse-und Obstteilchen erfolgt in an sich bekannter Weise. Bei zweckmäßig durchgeführter Gefriertrocknung bleiben die Zellmembranen der Gemüseteilchen im wesentlichen erhalten. Beim Einsatz des erfindungsgemäßen rodentiziden Mittels nimmt der Köder unter dem Einfluß der Bodenfeuchtigkeit wieder Wasser auf und das Eigengewicht erhöht sich um ein mehrfaches (z.B. bis zu dem 9-fachen Eigengewicht). Dabei bleibt auch in Extremsituationen die Textur des Köders erhalten und es wird vemieden, daß dieser breiig und dadurch gegebenenfalls für das Nagetier unattraktiv wird. Das trifft sowohl für grobe Stücke wie auch für feingemahlenes gefriergetrocknetes Gemüse und Obst zu.

Zu den erfindungsgemäß verwendbaren rodentiziden Wirkstoffen zählen die zu diesem Zweck bereits bekannten Rodentizide. Das sind z.B. Antikoagulantien, d.h. die Blutgerinnung hemmende Mittel, die die Tiere innerlich verbluten lassen. Beispiele derartiger Mittel sind solche auf Kumarinbasis, wobei insbesondere Warfarin, Chlorphacinon und Bromadiolon oder Difenacoum genannt werden können. Eine andere Art von verwendbaren Rodentiziden sind Akutgifte wie z.B. Zinkphosphid oder Alkalifluoride.

Ein erfindungsgemäß besonders bevorzugter Wirkstoff ist jedoch Calciferol bzw. Calciferol-Analoga. Die Verwendungsmöglichkeit dieses Wirkstoffes im Freiland ist überraschend, da in üblichen Ködern ein zu schneller Abbau des Calciferols vorhergesagt wird. In Verbindung mit dem reversibel-dehydratisierten Gemüse-und/oder Obstköder ist aber der Einsatz dieses Wirkstoffes, der sich ideal für die Anwendung im Freiland eignet, möglich.

Calciferol oder Calciferol-Analoga haben gute abtötende Wirkung auf die zu bekämpfenden Nagetiere, ohne daß schwerwiegende ökologische Nachteile in Kauf genommen werden müssen. So ist ein schneller Abbau des Wirkstoffes in der feuchten Erde bedeutungsvoll, weil auch nicht gefressener Köder mit der Zeit abgebaut wird und öko-toxikologisch keine Gefahr mehr darstellt. Auch hinsichtlich der Gefahr von Sekundärvergiftungen ist es bedeutungsvoll, daß Calciferol im Körper des Nagetiers schnell abgebaut wird. Lange vor Eintritt des Todes hören die Tiere auf, Nahrung zu sich zu nehmen, und es ist auch positiv zu bewerten, daß die vergifteten Tiere im allgemeinen vor ihrem Tod nicht mehr an die Oberfläche kommen, so daß die Gefahr einer Sekundärvergiftung z.B. von Haustieren oder Greifvögeln äußerst gering ist.

Die Menge an Wirkstoff in den erfindungsgemäßen rodentiziden Mitteln ist in gewissem Maße von dem zu bekämpfenden Nagetier abhängig. Zweckmäßig beträgt sie von 0,005 bis 1,5 Gew.-%, bezogen auf den Köder in dehydratisiertem Zustand.

Eine zweckmäßige Methode, den dehydratisierten Köder mit dem rodentiziden Wirkstoff zu versehen besteht darin, daß man eine Wirkstofflösung auf den Köder aufsprüht oder diesen in eine Wirkstofflösung eintaucht, wonach anschließend das Lösungsmittel beispielsweise durch Trocknung entfernt wird. Das Aufsprühen der Wirkstofflösung kann in einer bekannten Fließ-oder Wirbelschichtapparatur erfolgen, wobei zur Trocknung gleichzeitig erwärmte Luft oder Inertgas durch das Bett geblasen oder gesaugt werden kann.

Das Aufsprühen der Wirkstofflösung und das Abtrocknen des Lösungsmittels kann selbstverständlich auch in einer entsprechenden Vakuumapparatur erfolgen. Anstelle der Wirkstofflösung kann auch eine Dispersion eines Wirkstoffes in mikroverkapselter Form eingesetzt werden.

Liegt der dehydratisierte Köder in Partikeln ausreichender Größe und Gleichmäßigkeit vor, z.B. in Form von Würfeln oder Quadern, kann der Wirkstoff auch durch Injektion einer konzentrierten Wirkstofflösung in die Partikel eingebracht werden, wonach anschließend das Lösungsmittel beispielsweise durch Trocknung im Vakuum oder durch thermische Behandlung entfernt wird. Derartige Arbeitsweisen sind dem Fachmann bekannt und brauchen daher an dieser Stelle nicht weiter erläutert werden.

Sofern die Absicht besteht, die Haftung des Wirkstoffes an dem Köder zu verbessern, kann zusätzlich ein üblicher Filmbildner angewendet werden. Selbstverständlich sollte vermieden werden, daß ein derartiger Filmbildner die Attraktivität des Gemüseköders für die zu bekämpfenden Nagetiere vermindert, wozu beispielsweise ein starker Eigengeruch des Filmbildners Anlaß geben kann. Beispiele von erfindungsgemäß verwendbaren Filmbildnern sind Polyvinylpyrrolidon, Methylcellulose und deren Derivate sowie Polyacrylsäure und deren Derivate. Eine zweckmäßige Menge an einem derartigen Filmbildner liegt zwischen 50 und 300 Gew.-%, bezogen auf die Menge von verwendetem rodentiziden Wirkstoff. Der Filmbildner kann vorteilhaft der Wirkstofflösung als Feststoff (wenn er ausreichend löslich ist) oder in einem Hilfslösungsmittel gelöst (sofern die Löslichkeit des Filmbildners in der Wirkstofflösung nicht ausreichend ist) zugegeben werden, bevor der Gemüse- und/oder Obstköder mit der Wirkstofflösung behandelt wird.

Insbesondere bei Einsatz von oxidations- und/oder hydrolyseempfindlichen Wirkstoffen, wie z.B. Calciferol, können der Wirkstofflösung des weiteren auch Schutzstoffe zugesetzt werden, die die Wirkstoffpartikel mit einer Schutzschicht versehen, die den Zutritt von Wasserdampf und/oder Sauerstoff erschwert. Eine zweckmäßige Arbeitsweise, eine solche geschützte Wirkstoffschicht auf den Köder aufzubringen, besteht darin, den Wirkstoff und die Schutzstoffe in einer Lösung so auf den Köder aufzusprühen, daß die Tröpfchen der Sprühlösung auf der Oberfläche der Köderpartikel erstarren, bevor sie zu einem einheitlichen Film verlaufen. Eine solche Arbeitsweise liegt zwischen den, dem Fachmann als Sprühtrocknen und Befilmen bekannten, Techniken. Eine derartige Schutzschicht kann auch als gesonderte Schicht auf die aufgetragene Wirkstoffschicht in an sich bekannter Weise aufgebracht werden.

Selbstverständlich ist dabei jedoch darauf zu achten, daß trotz dieser Maßnahme ausreichend Wasser zur Regenerierung des dehydratisierten Gemüses oder Obstes hinzutreten kann. Beispiele von verwendbaren Schutzstoffen sind Stearin, Paraffin, Cellulose-Derivate, natürliche Harze (z.B. Schellack), natürliche und künstliche Wachse, Polyvinylacetat, Styrol-Maleinsäureanhydrid-Copolymerisate und/oder handelsübliche Mischpolymerisate aus Methacrylsäure und Methacrylsäureestern.

Selbstverständlich können auch bei dem Verfahren zur Herstellung der erfindungsgemäßen rodentiziden Mittel weitere übliche Zusatzstoffe eingesetzt werden, z.B. oberflächenaktive Substanzen, die die Verteilung des Wirkstoffes in der Schicht der Schutzstoffe regulieren. Es liegt in der Natur der Sache, daß bei der Auswahl derartiger Zusatzstoffe Materialien vermieden werden sollten, die die Annahme des mit dem Wirkstoff versehenen Köders durch die zu bekämpfenden Nagetiere in Frage stellt oder auch nur negativ beeinflußt. Auf jeden Fall entspricht es den gesetzlichen Vorschriften, daß die mit dem Wirkstoff versehenen Köder in auffälliger Weise z.B. mit Methylenblau eingefärbt werden, damit ein versehentlicher Genuß von diesen durch den Menschen vermieden wird.

Die wie oben beschrieben behandelten dehydratisierten Gemüse-und/oder Obstköder in Form kleiner Teilchen bzw. Granulate können als solche zur Bekämpfung von Nagetieren ausgelegt werden. Sofern aber der Wunsch besteht, daß die Köderteilchen als Körper mit regelmäßiger Form vorliegen, was die Auslegung der rodentiziden Mittel durch bereits bekannte Vorrichtungen erleichtert, können die oben beschriebenen Teilchen des Gemüseköders weiter verarbeitet werden.

Eine derartige Weiterverarbeitung kann beispielsweise erfolgen, indem ein Vermahlen der erfindungsgemäß mit dem rodentiziden Wirkstoff versehenen Köderteilchen erfolgt und der zerkleinerte Gemüseköder kann zu Tabletten, Pellets, Kügelchen oder anderen Körpern mit regelmäßiger Form verpreßt werden. Dabei können selbstverständlich geeignete Trägermaterialien und/oder Tablettierhilfsmittel mitverwendet werden, um den hergestellten Tabletten etc, die gewünschten physikalischen Eigenschaften zu vermitteln. Derartige Ausführungsformen haben auch den Vorteil, daß eine sehr genaue Dosierung des rodentiziden Wirkstoffes möglich ist.

Zur weiteren Erhöhung der Attraktivität der erfindungsgemäßen rodentiziden Mittel gegenüber den Nagetieren können diese abschließend mit einem Pflanzenöl, insbesondere mit Sonnenblumenöl, imprägniert werden oder sie können diese Komponente durch Zugabe zu einem anderen Zeitpunkt des Herstellungsverfahrens enthalten.

Die erfindungsgemäßen rodentiziden Mittel sind also in hervorragender Weise zur Bekämpfung von schädlichen Nagetieren selbst in den Fällen geeignet, in denen der Einsatz von bekannten Rodentiziden nicht zweckmäßig oder erfolgsversprechend ist. Dabei werden auch die unter Naturschutz stehenden Maulwürfe geschont, so daß also in dieser Hinsicht eine Selektivität der Nagetierbekämpfung gegeben ist.

Die vorliegende Erfindung wird durch die folgenden Beispiele näher erläutert.

Beispiel 1

In einem Dragierkessel wird auf 300 g gefriergetrocknete Selleriewürfel eine Lösung aus 2,1 g Calciferol, 0,1 g Methylenblau und 2 g handelsübliche Polyvinylpyrrolidon (Luviskol K 90 der BASF AG) in 600 g Dichlormethan aufgesprüht. Zur Trocknung wurde Luft von 30° C auf das Bett geblasen.

Beispiel 2

Das Verfahren nach Beispiel 1 wurde mit 300 g gefriergetrockneten Möhren wiederholt, wobei jedoch die folgenden Komponenten verwendet wurden:
2,1 g Calciferol
0,1 g Methylenblau
6,0 g Stearinsäure
600,0 g Dichlormethan
Man erhielt ein Produkt, das gegen Hydrolyse und Oxidation geschützt war.

Beispiel 3

Das Verfahren von Beispiel 1 wurde unter Verwendung der folgenden Komponenten wiederholt:
1,5 g Calciferol
0,1 g Methylenblau
3,0 g Eudragit RS (Warenzeichen der Röhm Pharma GmbH, Weiterstadt)
600,0 g Dichlormethan
Beim Aufsprühen wurden die Wirkstoffpartikel mit einer Schutzschicht umhüllt. Die Oberfläche der Gemüsewürfel wurde jedoch nicht völlig mit einer Lackschicht überzogen, so daß der Zutritt des für die Quellung im Boden notwendigen Wassers nicht behindert war.

Beispiel 4

6 kg gefriergetrocknete Möhren (fein gemahlen), 2,5 kg gefriergetrocknete Sellerie (fein gemahlen), 0,85 kg Zucker, 0,65 kg Aluminiumstearat und 0,2 kg Polyvinylpyrrolidon (Luviskol K 90 der BASF AG) werden in einem Rhönradmischer 1 h gemischt. Anschließend wird diese Mischung in einem Wirbelschichtgranulator mit einer Lösung von 10,3 g Bromadiolon, 2 g Fuchsin und 100 g Sonnenblumenöl in 3,5 kg Aceton granuliert. Das Granulat wird zu Kugeln mit 9 mm Durchmesser verpreßt.

Beispiel 5

Mit 300 g gefriergetrockneten Äpfeln in Form von Würfeln (ca. 10 x 10 mm) wurde das Verfahren von Beispiel 1 unter Verwendung folgender Komponenten wiederholt:
2,1 g Bromadiolon
3,0 g Polyvinylpyrrolidon (Luviskol K 90, BASF AG)
400,0 g Aceton

**Ansprüche**

1. Rodentizides Mittel, dadurch gekennzeichnet, daß es einen reversibel dehydratisierten, vorzugsweise gefriergetrockneten Gemüse-und/oder Obstköder und einen rodentiziden Wirkstoff als wesentliche Bestandteile umfaßt.

2. Rodentizides Mittel nach Anspruch 1, dadurch gekennzeichnet, daß der rodentizide Wirkstoff, gegebenenfalls zusammen mit einem Filmbildner, als Beschichtung auf dem reversibel dehydratisierten Gemüse-und/oder Obstköder in Form kleiner Teilchen bzw. Granulate vorliegt.

3. Rodentizides Mittel nach Anspruch 1 bis 2, dadurch gekennzeichnet, daß auf der Wirkstoffschicht eine weitere, den Zutritt von Wasserdampf und/oder Sauerstoff erschwerende Schutzschicht angeordnet ist.

4. Rodentizides Mittel nach Anspruch 1, dadurch gekennzeichnet, daß es in Form von Tabletten, Pellets, Kügelchen oder anderen Körpern mit regelmäßiger Form vorliegt, welche den feinteiligen reversibel dehydratisierten Gemüse-und/oder Obstköder und rodentiziden Wirkstoff zweckmäßig zusammen mit einem Trägermaterial und/oder Tablettier-Hilfsmittel enthalten.

5. Verfahren zur Herstellung von rodentiziden Mitteln auf Köderbasis, dadurch gekennzeichnet, daß man auf bzw. in reversibel dehyratisierte, vorzugsweise gefriergetrocknete Gemüse-und/oder Obstköder in Form kleiner Teilchen oder Granulate einen rodentiziden Wirkstoff auf-bzw. einbringt und die so behandelten Teilchen gegebenenfalls zu Tabletten, Pellets, Kügelchen oder anderen Körpern mit regelmäßiger Form verarbeitet.

6. Verfahren nach Anspruch 5, dadurch gekennzeichnet, daß man als Gemüseköder Teilchen von Wurzelgemüse, insbesondere Karotten oder Sellerie, verwendet.

7. Verfahren nach Anspruch 5 bis 6, dadurch gekennzeichnet, daß als rodentizider Wirkstoff ein organischer Giftstoff, insbesondere Calciferol oder Calciferol-Analoga oder ein Antikoagulant, oder ein anorganischer Giftstoff, insbesondere Zinkphosphid oder ein Alkalifluorid, verwendet wird.

8. Verfahren nach Anspruch 5 bis 7, dadurch gekennzeichnet, daß als rodentizider Wirkstoff ein Antikoagulant auf Kumarinbasis, insbesondere Chlorphacinon, Warfarin, Bromadiolon oder Difenacoum verwendet wird.

9. Verfahren nach Anspruch 5 bis 8, dadurch gekennzeichnet, daß der rodentizide Wirkstoff in einer Menge von 0,005 bis 1,5 Gew.-%, bezogen auf den Köder in dehydratisiertem Zustand, verwendet wird.

10. Verfahren nach Anspruch 5 bis 9, dadurch gekennzeichnet, daß die Aufbringung des rodentiziden Wirkstoffs durch Aufsprühen einer Wirkstofflösung oder Eintauchen in eine solche und anschließender Trocknung erfolgt.

11. Verfahren nach Anspruch 10, dadurch gekennzeichnet, daß das Aufsprühen der Wirkstofflösung in einer Fließ-oder Wirbelschichtapparatur erfolgt.

12. Verfahren nach Anspruch 10 bis 11, dadurch gekennzeichnet, daß der Wirkstofflösung zusätzlich ein Filmbildner, vorzugsweise Polyvinylpyrrolidon, Methylcellulose bzw. deren Derivate und/oder Polyacrylsäure bzw. deren Derivate, zugesetzt wird.

13. Verfahren nach Anspruch 5 bis 12, dadurch gekennzeichnet, daß zusätzlich ein Schutzstoff zum überziehen der Wirkstoffteilchen mit einer den Zutritt von Wasserdampf und/oder Sauerstoff erschwerenden Schutzschicht zugesetzt wird.

14. Verfahren nach Anspruch 5 bis 12, dadurch gekennzeichnet, daß eine den Zutritt von Wasserdampf und/oder Sauerstoff erschwerende Schtuzschicht auf die Schicht des aufgetragenen Wirkstoffs aufgebracht wird.

15. Verfahren nach Anspruch 13 bis 14, dadurch gekennzeichnet, daß als Schutzstoff Stearin, Paraffin, Cellulose-Derivate, natürliche Harze, natürliche und/oder künstliche Wachse, Polyvinylacetat, Styrol-Maleinsäureanhydrid-Copolymere und/oder handelsübliche Mischpolymerisate aus Methacrylsäure und Methacrylsäureestern verwendet werden.

16. Verfahren nach Anspruch 5 bis 13, dadurch gekennzeichnet, daß mit dem Wirkstoff behandelte Teilchen des Gemüse-und/oder Obstköders gegebenenfalls zermahlen und danach zu Tabletten, Pellets, Kügelchen oder anderen Körpern verpreßt werden.

17. Verfahren nach Anspruch 16, dadurch gekennzeichnet, daß vor dem Verpressen Trägermaterialien und/oder Tablettier-Hilfsmittel zugegeben werden.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| X | FR-A-2 382 854 (A.F.E. TREHET) <br><br> * Insgesamt * | 1,3-6, 10,13-17 | A 01 N 65/00 |
| | --- | | |
| X | FR-A-2 055 941 (A.F.E. TREHET) <br><br> * Insgesamt * | 1,3-10 ,13-17 | |
| | --- | | |
| X | FR-A-1 601 076 (A.F.E. TREHET) <br><br> * Insgesamt * | 1,3-10 ,13-17 | |
| | --- | | |
| X | FR-E- 95 858 (A.F.E. TREHET) <br><br> * Insgesamt * | 1,4-8, 10,16, 17 | RECHERCHIERTE SACHGEBIETE (Int. Cl.4) |
| | --- | | |
| X | GB-A- 516 703 (ERNST FREYBERG CHEMISCHE FABRIK DELITIA) <br><br> * Seite 1, Zeile 80 - Seite 2, Zeile 81; Beispiele; Ansprüche * | 1,2,4, 5,7,9, 10,16, 17 | A 01 N |
| | --- | | |
| A | DE-A-2 647 722 (LIPHA) <br> * Ansprüche; Beispiele * | 5,7-12 | |
| | ----- | | |

Der vorliegende Recherchenbericht wurde für alle Patentansprüche erstellt.

| Recherchenort | Abschlußdatum der Recherche | Prüfer |
|---|---|---|
| DEN HAAG | 26-02-1987 | FLETCHER A.S. |